# EUROPÄISCHE PATENTSCHRIFT

(11) **EP 0 739 454 B1**
(45) Veröffentlichungstag und Bekanntmachung des Hinweises auf die Patenterteilung: **12.08.1998**
(21) Anmeldenummer: 95938442.1
(22) Anmeldetag: 10.11.1995
(51) Int. Cl.: F16B 25/10

(54) **SELBSTBOHRENDE UND GEWINDEFORMENDE SCHRAUBE MIT FLIESSFORMABSCHNITT**
SELF-BORING, THREAD-MILLING SCREW WITH A FLOW FORMING
VIS TARAUDEUSE AUTOFOREUSE A SECTION DE FLUOTOURNAGE

(30) Priorität: 11.11.1994 DE 4440437
(43) Veröffentlichungstag der Anmeldung: 30.10.1996
(73) Patentinhaber: EJOT VERBINDUNGSTECHNIK GmbH & Co. KG, D-57334 Bad Laasphe (DE)
(72) Erfinder: BIRKELBACH, Ralf, D-57334 Bad Laasphe (DE)
(74) Vertreter: Bardehle, Heinz, Dipl.-Ing.
(86) Internationale Anmeldenummer: EP9504438
(87) Internationale Veröffentlichungsnummer: WO9615378

(56) Entgegenhaltungen:
- DE-U- 9 211 354
- FR-A- 2 320 451
- GB-A- 2 201 365

## Beschreibung

Die Erfindung bezieht sich auf eine selbstbohrende und gewindeformende Schraube gemäß Oberbegriff von Anspruch 1.

Eine derartige selbstbohrende und gewindeformende Schraube ist aus der DE-U-92 11 354.0 bekannt. Für das mit einer solchen Schraube zu realisierende Ausformen eines zylindrischen Durchzuges in einem Blech ist mit der aus einem Bohrabschnitt, einem Fließformabschnitt und einem Gewindeschaft bestehenden Schraube jedoch ein hoher Kraftaufwand erforderlich, da zwischen dem im wesentlichen zylindrischen Bohrabschnitt und dem im wesentlichen konisch verlaufenden Fließformabschnitt, der auch als Aufdornabschnitt bezeichnet wird, kein gleichmäßiger Übergang, sondern eine Kante vorhanden ist. Im Bereich der sich von den Schneidkanten des Bohrabschnittes erstreckenden Spannut ist zwischen dem zylindrischen Bohrabschnitt und dem konischen Aufdornabschnitt eine Schulter ausgebildet. Diese Schulter resultiert davon, daß die Spannut am Ende des zylindrischen Bohrabschnittes nahezu rechtwinklig zur Schraubenachse ausläuft und sich oberhalb der Spannut eine Materialanhäufung ergibt, welche einen deutlich größeren Durchmesser aufweist als der wirksame durch die Schneiden gebildete Durchmesser des Bohrabschnittes. Einerseits führt diese Schulter dazu, daß nach dem relativ leichten Durchdringen des Bohrabschnittes ein wesentlich größerer Anpreßdruck auf die Schraube auszuüben ist, um die beschriebene Schulter durch das Blech zu drücken und den konischen Aufdornabschnitt wirksam werden zu lassen, andererseits schränkt eine derartige Schulter die Anwendbarkeit für höherfeste Bleche stark ein. Da bei dieser bekannten Schraube die Spannut sich lediglich über die Länge des Bohrabschnittes erstreckt, können die sich in dieser Spannut ansammelnden und zweckmäßigerweise abzuführenden Bohrspäne zwischen das Blechmaterial und die oben beschriebene Schulter einklemmen, so daß die entstehende Reibungswärme im wesentlichen auf die Späne und nicht auf das Blech übertragen wird. Dadurch verschlechtert sich der Vorgang des Fließformens insofern, als der Fließformabschnitt während des Ausformens zu Rißbildung neigen kann.

Aus der US-A-5,141,376 ist eine selbstbohrende und gewindeformende Schraube bekannt, welche einen Bohrabschnitt, einen konisch verlaufenden, mit Gewindegängen versehenen Bereich und einen Gewindeschaft aufweist. Durch den sich an den Bohrabschnitt unmittelbar anschließenden konischen Gewindebereich wird unmittelbar nach dem Bohren des Bleches mit dem Bohrabschnitt ein Ausformen des Gewindes erzielt, was dem Ausbilden eines Gewindes in mehreren Fertigungsstufen entspricht. Eine derartige selbstbohrende Gewindeschraube weist den Nachteil auf, daß beim Einschrauben in dünnes Blech das Gewinde nach dem Durchbohren des Bleches sofort greift und das gebohrte Loch durch das nach Ergreifen des Gewindes erzeugte Entstehen eines Zwangsvorschubes ausreißen kann. Mit einer derartigen selbstbohrenden Schraube wird daher nur eine unzureichende Gewindehöhe und damit Haltestabilität erreicht, was zu einem begrenzten Überdrehmoment führt. Des weiteren kann auch eine Rißbildung des mit einer derartigen Schraube aufgeweiteten Bleches nicht ausgeschlossen werden. Darüber hinaus schließt der Bohrbereich unmittelbar an den konischen Gewindeabschnitt an, so daß die im Bohrabschnitt befindlichen Spannuten an dem Bereich enden, bei welchem das konisch ausgeformte Gewinde beginnt. Die im Bohrabschnitt durch den Bohrvorgang erzeugten Späne werden somit direkt in den Bereich gefördert, in welchem das Ausformen des Gewindes realisiert wird. Dadurch wird ebenfalls nicht nur erhebliche Reibenergie in die Späne anstelle in den aufzuweitenden Lochbereich eingeführt, sondern das bei der Gewindeausbildung störende Spanmaterial kann zu einer fehlerhaften Ausbildung des Gewindes und damit ebenfalls zu einer Verringerung des Überdrehmomentes führen.

In der DE-A-22 43 707 ist eine aufbördelnde und gewindeschneidende Schraube beschrieben. Diese aufbördelnde und gewindeschneidende Schraube weist einen zylindrischen Gewindeschaft und einen sich zum Schraubenende verjüngenden Aufdornabschnitt mit unrunder Querschnittsfläche auf, wobei die unrunde Querschnittsfläche vorzugsweise als Ellipsenfläche ausgebildet ist. Der Aufdornabschnitt ist so ausgebildet, daß er glatte und mit Gewindegangabschnitten versehene Umfangsbereiche aufweist. Dadurch, daß die Achse des konischen Aufdornabschnittes gegenüber der Achse des Gewindeschaftes versetzt ist und sich an den Aufdornabschnitt ein mit dem Gewindeschaft koaxialer Führungszapfen anschließt, soll erreicht werden, daß der exzentrisch ausgebildete Aufdornabschnitt den Rand eines Loches aufbördelt. Zwar weist in einem Ausführungsbeispiel der untere Bereich dieser Schraube eine Spannut auf, die sich über den Bohrabschnitt in den Aufdornabschnitt hineinerstreckt, der Bohrabschnitt geht jedoch ohne sanften Übergang durch eine scharfe Kante in den Aufdornabschnitt über, und die Spannut ist des weiteren in Drehrichtung vor den Spankanten angeordnet, so daß sich die von den Spankanten abgenommenen Späne beim Bohrvorgang in der Spannut sammeln und nicht ohne weiteres aus der Spannut abgeführt werden können. Somit besteht die Gefahr, daß beim sich dem Bohren anschließenden Aufbördelungsvorgang die Späne in erster Linie die erzeugte Reibenergie aufnehmen, wodurch sich die Fließeigenschaften des Materials verschlechtern und es zu Rißbildung kommen kann. Darüberhinaus ist zur Überwindung des diskontinuierlichen Überganges zwischen dem Bohrabschnitt und dem Aufdornabschnitt eine relativ große Andruckkraft der Schraube erforderlich, um den Aufdornabschnitt wirksam werden zu lassen. Bei einer derartigen Schraube ist der Fließvorgang außerdem mit starken Vibrationen verbunden, die entweder auf das zu befestigende Werkstück oder über die Schraube auf das Schraubwerkzeug in nicht tolerierbarer Weise übertragen werden. Da der als Führungszapfen bezeichnete Bohrabschnitt nach dem Durchtritt durch das Blech nicht mehr als Führungszapfen dienen kann, ist ein gleichmäßiges Ausformen bzw. Ausfurchen des Gewindes nicht möglich, da zuerst gebildete Gewindegänge nachfolgende zerstören können. Eine derartige selbstbohrende und gewindeformende Schraube ist außerdem vor allem für höherfeste Bleche, deren Einsatz zunehmend Bedeutung erlangt, nicht möglich.

Aus der US-A-3,937,120 ist eine gewindeformende Schraube offenbart. welche eine vorlaufende bzw. Führungs-Bohrspitze aufweist, von der sich zwei Längsspannuten erstrecken, die im allgemeinen flache und im wesentlichen koplanare radiale Wände aufweisen, welche die Seitenschneidkanten bilden. Der vordere Bereich der gewindeformenden Schraube weist einen Bohrabschnitt sowie einen sich bis zum Gewindeschaft erstreckenden konischen Bereich auf, wobei die von der Bohrspitze aus verlaufenden Schneiden sich in axialer Richtung durch ausgebildete Spannuten bis zum Beginn des Gewindeschaftes erstrecken, jedoch durch diskontinuierlich aneinandergrenzende Abschnitte unstetig verlaufen. Bei einer derartigen Schraube wird somit bis an den Bereich des Gewindeschaftes heran Material in Form von Spänen aus dem Loch herausgeschnitten und kann dadurch direkt in den Bereich geführt werden, in welchem das Gewinde ausgebildet werden soll. Deshalb ist die Gewindeausbildung permanent durch vorhandene Späne gestört, weshalb durch fehlerhaft ausgebildetes Gewinde das Überdrehmoment, welches mit einer derartigen Schraube erzielbar ist, sehr begrenzt ist.

Es ist daher das Ziel der Erfindung, eine selbstbohrende und gewindeformende Schraube mit einem Fließformabschnitt zu schaffen, welche im Vergleich zu bekannten Ausführungsformen die axiale Andruckkraft reduziert, bei Verwendung von dünnem Blech ein hohes Überdrehmoment bei optimierter Abfuhr der während des Bohrens erzeugten Späne realisiert und die Einschraubzeit verringert sowie auch bei höherfesten Blechen zuverlässig arbeitet.

Dieses Ziel wird mit einer Schraube mit den Merkmalen gemäß Anspruch 1 erzielt.

Eine derartige selbstbohrende und gewindeformende Schraube weist einen Gewindeschaft sowie einen davor angeordneten Bohrabschnitt mit im wesentlichen gleichbleibendem Durchmesser auf, wobei zwischen dem Bohrabschnitt und dem Gewindeschaft ein im wesentlichen konisch sich erweiternder gewindefreier Fließformabschnitt vorhanden ist.

Von Schneidkanten des Bohrabschnittes verlaufen in Längsrichtung jeweils einander diametral gegenüberliegende Spannuten, die ihrerseits von Flutkanten und Schneidkanten begrenzt sind. Die im unteren Bohrabschnitt ausgebildeten Schneidkanten laufen in der Mitte zusammen und bilden die Spitze des Bohrabschnittes. Um eine möglichst kleine Bohrkraft ausüben zu müssen und um andererseits eine möglichst große Aufkragung um das gebohrte Loch herum zu erzeugen, ist der von den Schneidkanten gebildete Durchmesser wesentlich kleiner als der Kerndurchmesser des Gewindeschaftes. Der zwischen dem Bohrabschnitt und dem Gewindeschaft angeordnete Fließformabschnitt, dessen größter Durchmesser etwa dem Kerndurchmesser des Gewindeschaftes entspricht, weist in einem an den Gewindeschaft angrenzenden Bereich einen im wesentlichen symmetrischen polygonartigen Querschnitt auf. Der Querschnitt ist dennoch kontinuierlich ausgebildet, da deren Ecken abgerundet sind. Um ein leichtes, gleichmäßiges und vibrationsfreies Einschrauben der selbstbohrenden und gewindeformenden Schraube gemäß der Erfindung zu realisieren, sind des weiteren der Bohrabschnitt, der Fließformabschnitt und der Gewindeschaft auf einer gemeinsamen Rotationsachse angeordnet.

Um ein Stören der beim Bohren erzeugten Späne während des Fließformvorganges bzw. auch während des Gewindeformungsprozesses zu verhindern, sind die Spannuten der Schraube gemäß der Erfindung so ausgebildet, daß sie sich von den Schneidkanten des Bohrabschnittes zumindest bis über einen wesentlichen Teil des Fließformabschnittes erstrecken und deren Flutkanten in Richtung auf den Gewindeschaft tangential in die abgerundeten Ecken des polygonartigen Querschnittes einlaufen. Dadurch ist gewährleistet, daß die Spannut im wesentlichen der Bewegungskurve folgt, die durch die auf die Späne wirkenden Massenkräfte und durch die Rotation erzeugt wird, wodurch die Spanabfuhr erleichtert wird. Die Spanabfuhr wird des weiteren auch dadurch erleichtert, daß, unter anderem auch infolge der Massenträgheit der Späne, noch während des ersten Teiles des Fließformvorganges, jedoch nach Beenden des Bohrvorganges, d.h. nach Durchtritt des Bohrabschnittes durch das Blech, eine Spanabfuhr gewährleistet ist. Des weiteren ist zwischen dem Bohrabschnitt und dem Fließformabschnitt ein Übergangsbereich vorgesehen, der nicht nur zu einer wesentlichen Reduzierung der auf die Schraube auszuübenden Andruckkraft beiträgt, sondern auch einen sanften Übergang zwischen Bohrvorgang und Fließformvorgang bei reduzierter Kraftaufwendung gewährleistet.

Auf der den Spannuten abgewandten Seite des Bohrabschnittes sind wulstartige Erhöhungen ausgebildet, deren Querschnittsausdehnung, welche durch die diametrale Entfernung zweier wulstartigen Erhöhungen gebildet wird, in Richtung auf den Übergangsbereich wächst, so daß in dem Übergangsbereich diese Querschnittsausdehnung im wesentlichen gleich dem von den Schneidkanten gebildeten Durchmesser ist. Um einen besonders sanften Übergang zu erzeugen, ist es ebenfalls möglich, daß die Querschnittsausdehnung der wulstartigen Erhöhungen um einen geringen Betrag kleiner als der durch die Schneidkanten gebildete Durchmesser ist. Dieser geringe Betrag kann vorzugsweise im Bereich von 0,1 bis 0,3 mm liegen. Des weiteren gehen die wulstartigen Erhöhungen jeweils kontinuierlich im Übergangsbereich in diametral gegenüberliegende der abgerundeten Ecken über, deren Querschnittsausdehnung im Fließformabschnitt größer ist als der von der Verlängerung der Schneidkante gebildete Durchmesser.

In einem bevorzugten Ausführungsbeispiel erstreckt sich die Ausdehnung der Spannut bis etwa über die halbe axiale Länge des Fließformabschnittes. In dem Bereich ohne Spannuten wird der an den Gewindeschaft angrenzende polygonartige Querschnitt des Fließformabschnittes durch Abflachungen im Querschnitt gebildet, die durch die abgerundeten Ecken getrennt sind.

In einem weiteren bevorzugten Ausführungsbeispiel weist der polygonartige Querschnitt vier abgerundete Ecken in symmetrischer Anordnung auf, wobei zwei der abegrundeten Ecken sich im wesentlichen über die gesamte Länge des Fließformabschnittes erstrecken und den wirksamen Durchmesser des Fließformabschnittes definieren.

Ein weiterer wesentlicher Vorteil des bei der erfindungsgemäßen Schraube ausgebildeten Übergangsbereiches besteht darin, daß die beim Bohren mit einer Schraube gemäß dem Stand der Technik erzeugte Linienberührung entlang der Oberkante des Loches, wenn der Fließformabschnitt in Kontakt mit dem Lochoberrand tritt, durch einen Bereich ersetzt wird, der eine viel größere Reibfläche darstellt, wodurch ein größerer und gleichmäßigerer Wärmeeintrag zu Beginn des Fließformprozesses erzielt wird. Es sind also keine direkten Störkanten vorhanden, die bei Schrauben des Standes der Technik an der Grenze zwischen dem Bohrabschnitt und dem Fließformabschnitt auftreten, wodurch bei Schrauben gemäß der Erfindung besonders in der Anfangsphase des Fließformabschnittes eine schnellere Bearbeitung größerer Flächen mit besserer Qualität erzielt werden kann.

In einem weiteren bevorzugten Ausführungsbeispiel sind die Spannuten der Schraube so gestaltet, daß ihre Flutkanten in Richtung auf den Gewindeabschnitt einen bogenförmigen Verlauf aufweisen und in Eindrehrichtung der Schraube rückwärts verlaufen, wobei sie sich unter einem Winkel zur Schraubenlängsachse, welcher vorzugsweise kleiner als 30° ist, dem Außendurchmesser des polygonartigen Querschnittes des Fließformabschnittes derart nähern, daß sie tangential in die abgerundeten Ecken im Fließformabschnitt auslaufen. Es ist jedoch auch möglich, daß sich die Spannuten über den gesamten Bereich des Fließformabschnittes vom Übergangsbereich bis zum Gewindeabschnitt erstrecken.

Um eine möglichst optimale Spanabfuhr auch am Ende der Spannut zu gewährleisten und gleichzeitig einen ebenfalls die Andruckkraft reduzierenden Übergang von der Spannut in den spannutfreien Bereich des Fließformabschnittes zu schaffen, bilden die Spannuten im Fließformabschnitt in ihrem Auslaufbereich jeweils eine nahezu ebene Fläche, welche sich in einem Winkel der Außenkontur des Fließformabschnittes nähert, der vorzugsweise kleiner als 30° ist, um somit der kontinuierlichen Kontur der jeweiligen Flutkante zu folgen.

Bei einem weiteren bevorzugten Ausführungsbeispiel, bei welchem die Spannuten sich über einen wesentlichen Teil des Fließformabschnittes erstrecken, treffen sich die Schneidkanten der jeweiligen Flutkante hinter der im wesentlichen ebenen Fläche des Auslaufbereiches an den für den Fließformvorgang wirksamen abgerundeten Ecken im wesentlichen tangential.

Um einen möglichst sanften Übergang zwischen Bohrvorgang und Fließformvorgang zu schaffen und um den Beginn des Fließformvorganges mit relativ geringen Andruckkräften realisieren zu können, ändert sich bei einem weiteren bevorzugten Ausführungsbeispiel der Radius der abgerundeten Ecken derart, daß er sich kontinuierlich vom Gewindeschaft in Richtung auf den Bohrabschnitt bzw. den Übergangsbereich vergrößert.

Weitere Vorteile, Merkmale und Anwendungsmöglichkeiten der Erfindung sind in der nachfolgenden detaillierten Beschreibung unter Bezugnahme auf die Zeichnungsseiten ausgeführt.

Es zeigen:
- Fig. 1: eine Längsansicht der Schraube gemäß der Erfindung;
- Fig. 2: den unteren Bereich der Schraube gemäß der Erfindung, welcher aus einem Bohrabschnitt, einem Übergangsabschnitt, einem Fließformabschnitt und dem Gewindeschaft besteht;
- Fig. 3: zeigt den unteren Abschnitt gemäß Fig. 2, wobei charakteristische Schnittebenen eingezeichnet sind;
- Fig. 4: zeigt die den charakteristischen Schnittebenen nach Fig. 3 entsprechenden jeweiligen Querschnittsformen des unteren Bereiches der Schraube gemäß der Erfindung sowohl für den Bohrabschnitt als auch den Fließformabschnitt;
- Fig. 5: zeigt den Abschluß des Bohrvorganges durch das Blech mit einer Schraube gemäß der Erfindung;
- Fig. 6: zeigt den mit der Schraube gemäß der Erfindung erzielte Fließformvorgang; und
- Fig. 7: zeigt die in den fließverformten Bereich des Bleches eingeschraubte Schraube gemäß der Erfindung.

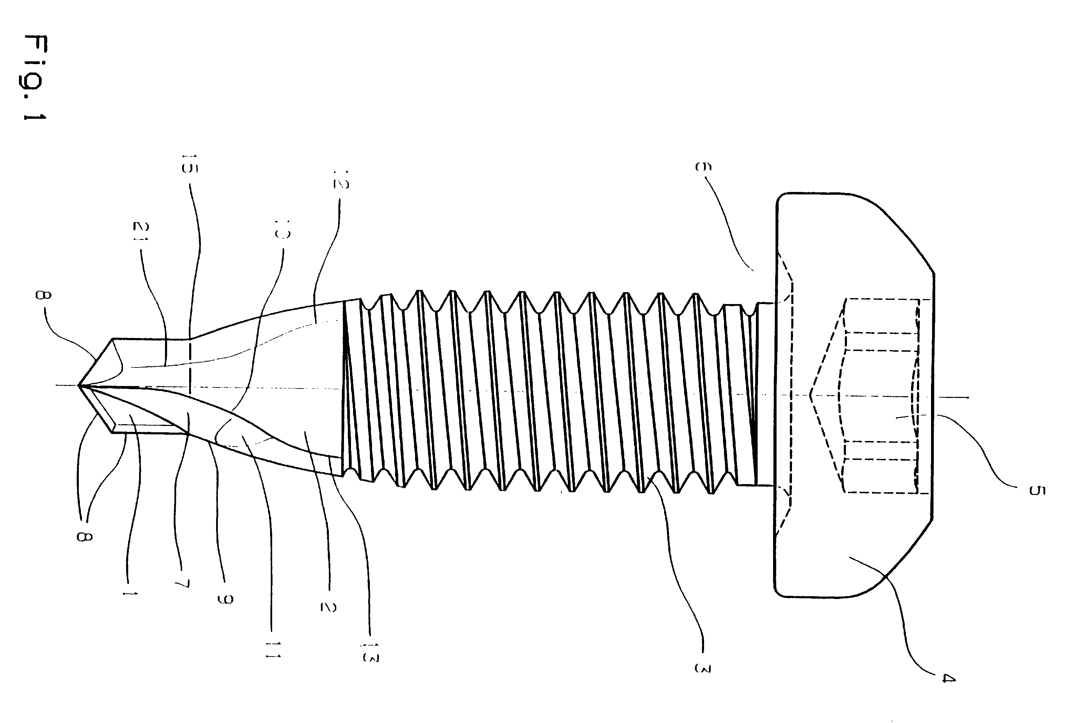

Die in Fig. 1 dargestellte Schraube weist einen Bohrabschnitt 1, einen Fließformabschnitt 2, einen Gewindeschaft 3 und einen Kopf 4 mit einem Antrieb 5 auf. Der Antrieb 5 kann auch ein außen an dem Kopf 4 angeformter Sechskant sein. In die zur Anlage an das Blech 17 bestimmte Anlagefläche des Kopfes, d.h. die dem Gewindeschaft zugewandte Fläche, ist eine Ringnut 6 eingearbeitet, welche einen Übergang darstellt vom Gewindeschaft 3 zur Anlagefläche des Kopfes 4. Der oder ein Teil des letzten Gewindeganges, welcher an den Kopf 4 der Schraube angrenzt, weist einen reduzierten Außendurchmesser auf. An dem dem Kopf 4 abgewandten Ende des Gewindeschaftes 3 weist das Gewinde ebenfalls einen Gewindegang oder mehrere Gewindegänge mit reduziertem Außendurchmesser auf. Der Übergang des Bereiches des Gewindeschaftes 3 mit verringertem Außendurchmesser erfolgt dabei kontinuierlich, bis der Außendurchmesser des Gewindeschaftes 3 erreicht ist. An dem dem Kopf 4 der Schraube gegenüberliegenden Ende des Gewindeschaftes 3 schließt sich ein in Richtung auf die Schraubenspitze sich verjüngender Abschnitt an, dessen größter Durchmesser etwa dem Kerndurchmesser des Gewindeschaftes 3 entspricht und dessen kleinster Durchmesser in einem Übergangsbereich 15 etwa dem durch Schneidkanten 8 gebildeten Durchmesser des Bohrabschnittes 1 entspricht. Der sich verjüngende Bereich stellt einen Fließformabschnitt 2 dar, der auch als Aufdornabschnitt bezeichnet wird. Die aus der Fig. 1 ersichtliche Außenkontur des Fließformabschnittes 2 ist dabei so ausgebildet, daß sich deren sichtbarer Radius in Richtung auf den Übergangsbereich 15 zwischen dem Fließformabschnitt 2 und dem Bohrabschnitt 1 vergrößert, jedoch mit stetiger Krümmung kontinuierlich in den Übergangsbereich 15 an dem dem Bohrabschnitt 1 angrenzenden Ende übergeht. Der Fließformabschnitt kann jedoch auch eine kegelstumpfförmige Gestalt aufweisen. In Richtung auf die Schraubenspitze erstreckt sich von dem Übergangsbereich 15 der Bohrabschnitt 1. Der Bohrabschnitt 1 weist Schneidkanten 8 auf, die von beiden Seiten auf die Bohrspitze zulaufen und sich in einem Seitenabschnitt, der sich im wesentlichen bis zum Übergangsbereich 15 parallel erstreckt, fortsetzen und den größten Durchmesser des Bohrabschnittes 1 bilden. Hinter den Schneidkanten ist, beginnend von der Bohrspitze, jeweils eine in Längsrichtung der Schraube verlaufende Spannut 7 angeordnet. Die Bohrspitze mit ihren beiden Schneidkanten 8 bildet den Teil des Bohrabschnittes 1, der beim Aufsetzen auf ein Werkstück 17 das Loch in dieses einbohrt. Um den Kraftaufwand bzw. die Andruckkraft der Schraube zum Ausbohren des Loches möglichst gering zu halten und um andererseits zu gewährleisten, daß beim Fließvorgang, d.h. den Aufdornvorgang, ein genügend großer Verdrängungsbereich ausgebildt wird, der für die Ausbildung von deutlich mehr Gewindegängen notwendig ist, als es die eigentliche Dicke des Bleches 17 zuläßt, beträgt der von den Schneidkanten 8 gebildete Durchmesser des Bohrabschnittes 1 etwa 50 bis 75 % des Außendurchmessers des Gewindeschaftes 3.

Die von der Bohrspitze aus verlaufenden Spannuten 7 werden auf einer Seite jeweils von einer Flutkante 10 und auf der dieser gegenüberliegenden Seite von einer Schneidkante 8 sowie der Verlängerung 9 der Schneidkante 8 begrenzt. Die Spannut 7 erstreckt sich in einer gewundenen, bezogen auf die Eindrehrichtung der Schraube, rückwärts gekrümmten Form von dem Bohrabschnitt 1 in den Fließformabschnitt 2 hinein und erstreckt sich dort über einen wesentlichen Teil der Länge des Fließformabschnittes 2. An der Stelle im Fließformbereich 2, an welcher die Spannut 7 endet, treffen sich die Flutkante 10 und die Verlängerung 9 der Schneidkante 8. Dieser Auslaufbereich der Spannut 7 bildet eine im wesentlichen ebene Fläche, deren Ränder durch Radien kontinuierlich, d.h. ohne Kanten, in die Außenkontur des Fließformabschnittes 2 bzw. in den in Richtung auf die Bohrspitze weisenden Bereich der Spannut 7 übergehen.

Auf der Rückseite der durch die Schneidkanten 8 begrenzten Seite der Spannut 7 ist eine Materialanhäufung vorgesehen, welche eine wulstartige Erhöhung 21 bildet. Diese wulstartige Erhöhung 21 weist an ihrer Oberseite einen Radius auf, der sich in Richtung auf den zwischen dem Fließformabschnitt 2 und dem Bohrabschnitt 1 befindlichen Übergangsbereich 15 verringert, ohne eine direkte Kante zu bilden. Darüberhinaus erhöht sich die wulstartige Erhöhung 21 in Richtung auf den Übergangsbereich 15, bis auf ein Maß, welches zusammen mit der der anderen Schneidkante gegenüberliegenden wulstartigen Erhöhung 21 einen Durchmesser bildet, welcher im Übergangsbereich 15 etwa gleich dem durch die Schneidkanten 8 gebildeten Durchmesser ist. Es ist jedoch auch möglich, daß in dem Übergangsbereich 15 der durch die wulstartigen Erhöhungen 21 gebildete Durchmesser um 1/10 bis 2/10 mm kleiner ist als der durch die Schneidkanten 8 gebildete Bohrdurchmesser. Eine derartige Gestaltung des Übergangsbereiches 15 gewährleistet, daß nach erfolgtem Bohren durch den Bohrabschnitt 1 der Fließformabschnitt 2 in gewissem Maße in das Bohrloch am oberen Rand mit dem Fließformabschnitt 2 eintauchen kann, damit schneller mehr Material durch eben diese vergrößerten Reibflächen erwärmt werden kann, damit der eigentliche Fließformvorgang schneller, effektiver und gleichmäßiger im Übergangsbereich eingeleitet werden kann. Je nach Schraubengröße und Gestaltung liegt der Übergangsbereich in einer Größenordnung von 0,2 bis ca. 2 mm, vorzugsweise im Bereich von 0,3 bis 1,0 mm und noch bevorzugter im Bereich von 0,4 bis 0,7 mm. Die wulstartigen Erhöhungen 21 verlaufen kontinuierlich im Übergangsbereich 15 in die abgerundeten Ecken 12 des polygonen Querschnittes des Fließformabschnittes 2. Gleichermaßen ist ein kontinuierlicher Übergang der Schneidkanten 8 in die Verlängerung 9 der Schneidkanten 8 im Übergangsbereich 15 vorgesehen, damit einerseits ein stoßfreier bzw. nahtloser Übergang vom Bohrvorgang in den Fließformvorgang sowie andererseits ein sanftes Einleiten des eigentlichen Fließformvorganges erzielt werden kann.

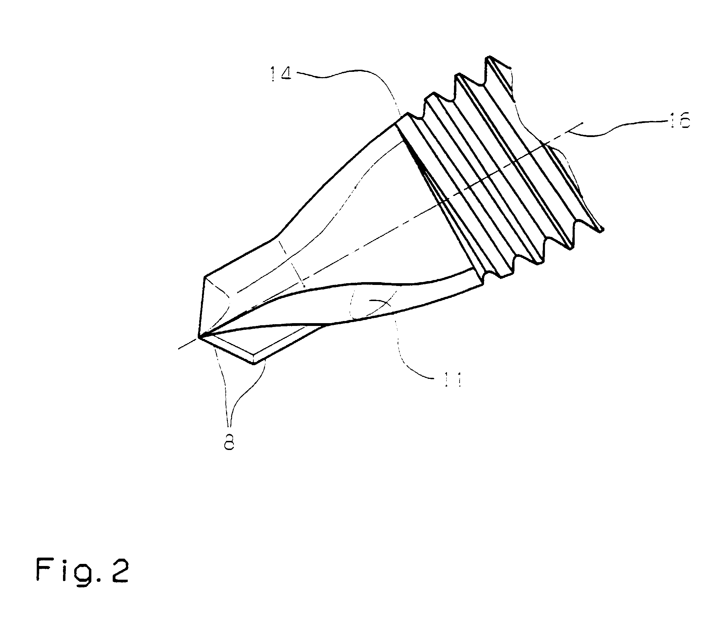

Fig. 2 zeigt den unteren Teil der Schraube gemäß der Erfindung mit dem die Schneidkanten 8 aufweisenden Bohrabschnitt 1, dem zwischen dem Bohrabschnitt 1 und dem Fließformabschnitt 2 vorgesehenen Übergangsabschnitt 15 und einem Teil des Gewindeschaftes 3. Alle Abschnitte der Schraube bzw. Teile der Schraube liegen auf einer gemeinsamen Mittellängsachse 16. Im Übergang vom Fließformabschnitt 2 zum Gewindeschaft 3 weist das Gewinde eine oder mehrere Windungen 14 mit reduziertem Außendurchmesser auf, um einen stoßfreien Übergang vom fertigfließgeformten Kragen am Lochrand des Bleches 17 zu dem in diesen Kragen einzuschneidenden Gewinde zu realisieren.

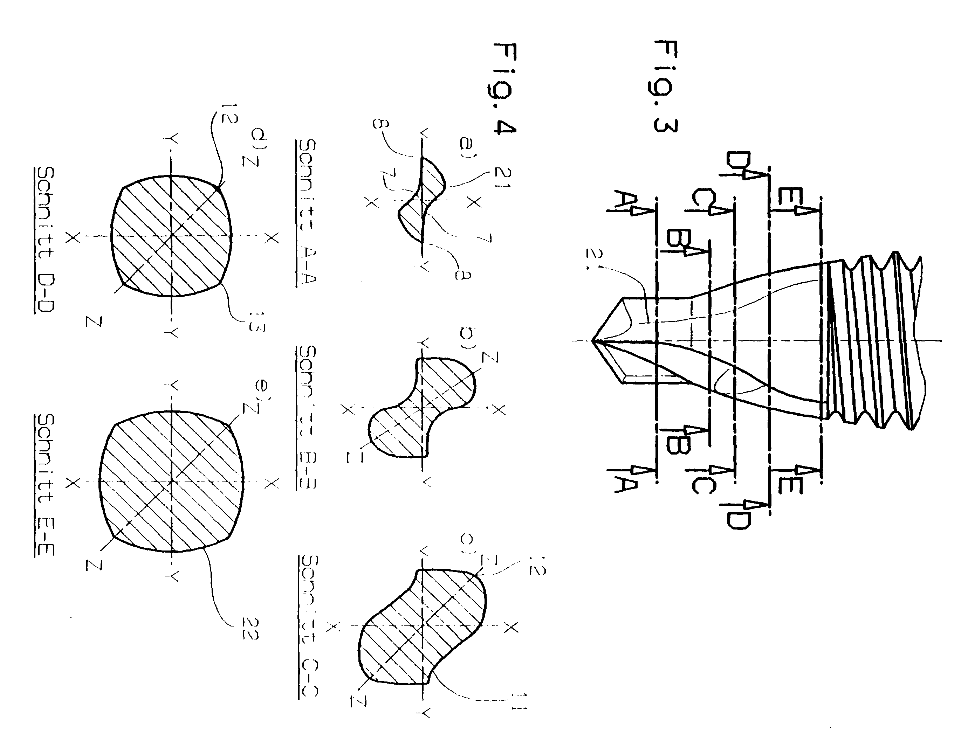

In Fig. 3 ist der gleiche untere Abschnitt der Schraube wie in Fig. 2 gezeigt, jedoch mit verschiedenen, im Bohrabschnitt 1 sowie im Fließformabschnitt 2 eingezeichneten Schnittebenen dargestellt.

Die in diesen verschiedenen Schnittebenen sich ergebenden unterschiedlichen Querschnitte des unteren Bereiches der Schraube gemäß der Erfindung sind in Fig. 4 dargestellt.

Fig. 4a) zeigt einen Schnitt A-A durch etwa die Mitte der Längsausdehnung des Bohrabschnittes 1. Fig. 4a) zeigt, daß die durch die Schneidkanten 8 definierte Querschnittsausdehnung größer ist als die durch die wulstartigen Erhöhungen 21 gebildete Querschnittsausdehnung. Das bedeutet, daß die Schneidkanten den Bohrschneidvorgang ausführen.

Der in Fig. 4b) gezeigte, in der Schnittebene B-B liegende Querschnitt zeigt, daß in dem Bereich kurz oberhalb des Übergangsbereiches 15, in welchen die Schnittebene B-B gelegt ist, die größte Querschnittsausdehnung, welche auf der Achse Z-Z vorhanden ist, durch die abgerundeten Ecken gebildet wird, welche die Fortsetzung der abgerundeten Ecken des an den Gewindeschaft anschließenden polygonartigen Querschnittes des Fließformabschnittes 2 bilden. Es ist ersichtlich, daß in dieser Schnittebene B-B die durch die Schneidkanten 8 gebildete Querschnittsausdehnung kleiner ist als die auf der Achse Z-Z liegende, so daß die Schneidkanten 8 in diesem Bereich des Fließformabschnittes 2 nicht mehr mit dem Material des Bleches 17 in Eingriff sind.

In der Fig. 4c) ist die Schnittebene C-C im Bereich des Fließformabschnittes 2 derart angeordnet, daß sie durch die im wesentlichen ebene Fläche 11 im Auslaufbereich der Spannut 7 hindurchgeht. In dem in dieser Schnittebene liegenden Querschnitt des Fließformabschnittes 2 ist die ebene Auslauffläche 11 der Spannuten 7 eingezeichnet, wobei die Übergänge von der Fläche in den Außenkonturbereich des Fließformabschnittes durch Radien ausgebildet ist.

In der Fig. 4d) ist die Schnittebene D-D an das Ende des Auslaufbereiches der Spannut 7 gelegt, so daß sich der entsprechende dargestellte Querschnitt ergibt. In diesem Querschnitt oberhalb der Spannut ist der eigentliche polygonartige Querschnitt des Fließformabschnittes mit den abgerundeten Ecken 12 und 13 dargestellt. Diese abgerundeten Ecken bilden jeweils die größte Querschnittsausdehnung, von denen eine auf der Achse Z-Z in dem Querschnitt eingezeichnet ist.

Und schließlich ist in der Fig. 4e) der in der Schnittebene E-E, an den Gewindeschaft 3 angrenzende Querschnitt des Fließformabschnittes 2 dargestellt. Dieser Querschnitt weist ebenfalls die voll ausgebildete Polygonform auf, deren größte Querschnittsabmessung durch die abgerundeten Ecken 12, 13 gebildet wird.

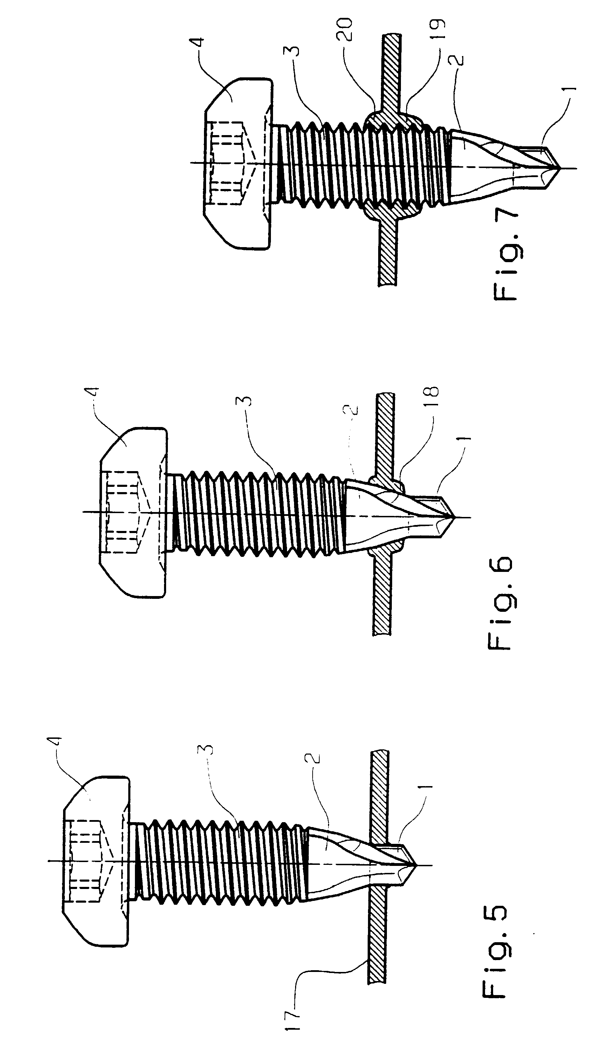

In den Fig. 5 bis 7 ist der eigentliche Einschraubvorgang dargestellt. Der bei den Schrauben gemäß der Erfindung relativ dünn ausgeführte Bohrabschnitt 1, welcher bei einer Schraube von 5 mm Außendurchmesser etwa einem Durchmesser von 2,5 mm entspricht, erlaubt das Bohren eines entsprechend engen Bohrloches mit einem geringen Energieaufwand, d.h. mit einem relativ kleinen Drehmoment bzw. mit einer relativ kleinen Andruckkraft. Das mit dem Bohrabschnitt 1 gebohrte relativ enge Loch gestattet das am Ende des Bohrvorganges ablaufende sanfte Eindringen des Übergangsbereiches zum stoßfreien Einleiten des Fließformabschnittes, welcher eine erhebliche Erwärmung des betreffenden Werkstückes durch Reibung verursacht, die das Material des Werkstückes 17 zum Fließen bringt. Dadurch, daß die Spannuten sich in den sich in Richtung auf den Gewindeschaft der Schraube kontinuierlich vergrößernden Fließformabschnitt geführt ist, können die beim Bohrvorgang erzeugten Späne in den Spannuten 7 infolge von deren Massenträgheit und infolge der auf sie wirkenden rotationsbedingten Kräfte auch nach Beendigung des eigentlichen Bohrvorganges abgeführt werden, so daß die Behinderung von Bohrspänen während des Fließformvorganges weitestgehend minimiert bzw. eliminiert wird. Die Phase der Beendigung des Bohrvorganges ist in Fig. 5 dargestellt.

Durch die Wirkung des sich in Richtung auf den Gewindeschaft kontinuierlich vergrößernden Fließformabschnittes 2 fließt das erweichte Material des Werkstückes 17 sowohl gegen die Richtung des Eindrehens der Schrauben als auch in gleicher Richtung und formt während des Fließvorganges eine Düse, die durch einen am Lochrand des Werkstückes 17 ausgebildeten Kragen gebildet ist. Dieser Vorgang ist in Fig. 6 dargestellt.

Nach dem vollständigen Durchtritt des Fließformabschnittes 2 durch die Düse ist ein im wesentlichen zylindrisches Loch durch den Kragen ausgebildet, in welchen sich das Gewinde des Gewindeschaftes 3 einformt bzw. einfurcht. Der an dem Loch des Werkstückes 17 ausgebildete Abschnitt ist dabei als fließgeformter kragenartiger Abschnitt 19 nach unten als auch in gewissem Maße als fließgeformter kragenartiger Abschnitt 20 nach oben in Richtung auf den Schraubenkopf ausgebildet. Somit ist die für die Ausbildung des Gewindes wirksame Materialdicke größer als die eigentliche Materialstärke des betreffenden Werkstückes 17. Es lassen sich auf diese Weise kragenartige Abschnitte 19, 20 erzeugen, die etwa doppelt so lang sind, wie das betreffende Werkstück 17 dick ist. Darüberhinaus führt die anschließende Erkaltung dieses kragenartigen Abschnittes zu einem Zusammenziehen des Materials des Werkstückes 17, wodurch die eingedrehte Schraube zusätzlich festgehalten wird. Dieser Vorgang ist in Fig. 7 dargestellt.

Es hat sich als zweckmäßig erwiesen, den Fließformabschnitt polygonartig im Querschnitt auszubilden, der vollständig zumindest in dem Bereich zwischen Ende des Auslaufbereiches der Spannut bis zum Ende des Fließformabschnittes 2 an dem Gewindeschaft ausgebildet ist. Dieser polygonartige Querschnitt weist demzufolge vier symmetrische Abflachungen 22 auf, die durch entsprechend abgerundete Ecken 12, 13 kontinuierlich ineinander übergehen, jedoch gewährleisten, daß beim Fließformen nur gewisse Bereiche des Querschnittes in Eingriff mit dem Material sind, so daß die Bereiche, in denen die Eingriffsbereiche nicht wirken. zum Verdrängen des in einen Fließzustand versetzten Materials benutzt werden können. Es ist somit möglich, beim Eindrehen des Fließformabschnittes 2 das Material des Werkstückes 17 sowohl in radialer als auch in axialer Richtung wegzudrücken.

## Patentansprüche

1. Selbstbohrende und gewindeformende Schraube mit einem Gewindeschaft (3) und einem davor angeordneten Bohrabschnitt (1) mit im wesentlichen gleichbleibendem Durchmesser und einem zwischen dem Bohrabschnitt (1) und dem Gewindeschaft (3) im wesentlichen konisch sich erweiternden gewindefreien Fließformabschnitt (2), wobei der Bohrabschnitt (1) zwei in Längsrichtung verlaufende, einander diametral gegenüberliegende Spannuten (7), die jeweils von Flutkanten (10) und Schneidkanten (8) begrenzt sind, aufweist und in einer Bohrspitze mit den zwei in der Spitze zusammenlaufenden Schneidkanten (8) endet, und wobei der von den Schneidkanten (8) gebildete Durchmesser wesentlich kleiner als der Kerndurchmesser des Gewindeschaftes (3) ist, wobei der Fließformabschnitt (2). dessen größter Durchmesser etwa dem Kerndurchmesser des Gewindeschafts (3) entspricht, in einem an den Gewindeschaft (3) angrenzenden Bereich einen im wesentlichen symmetrischen polygonartigen Querschnitt mit abgerundeten Ecken (12, 13) aufweist, und bei welcher der Bohrabschnitt (1), der Fließformabschnitt (2) und der Gewindeschaft (3) auf einer gemeinsamen Rotationsachse (16) liegen,
**dadurch gekennzeichnet,** daß
a) die Spannuten (7) sich von den Schneidkanten (8) zumindest bis über einen wesentlichen Teil des Fließformabschnittes (2) erstrecken und deren Flutkanten (10) in Richtung auf den Gewindeschaft (3) tangential in die abgerundeten Ecken (13) des polygonartigen Querschnittes einlaufen;
b) zwischen dem Bohrabschnitt (1) und dem Fließformabschnitt (2) ein Übergangsbereich (15) vorgesehen ist;
c) wulstartige Erhöhungen (21) auf der den Spannuten (7) abgewandten Seite des Bohrabschnittes (1) ausgebildet sind, welche eine in Richtung auf den Übergangsbereich (15) wachsende Querschnittsausdehnung bilden, so daß in dem Übergangsbereich (15) diese Querschnittsausdehnung im wesentlichten gleich dem von den Schneidkanten (8) gebildeten Durchmesser ist; und
d) die wulstartigen Erhöhungen (21) jeweils kontinuierlich im Übergangsbereich (15) in diametral gegenüberliegende der abgerundeten Ecken (12) übergehen, deren Querschnittsausdehnung im Fließformabschnitt (2) größer ist als der von den Verlängerungen (9) der Schneidkanten (8) gebildete Durchmesser.

2. Schraube nach Anspruch 1, dadurch gekennzeichnet, daß die Spannuten (7) sich bis etwa über die halbe axiale Länge des Fließformabschnittes (2) erstrecken und in dem Bereich ohne Spannuten (7) der an den Gewindeschaft (3) angrenzende polygonartige Querschnitt des Fließformabschnittes (2) durch Abflachungen (22) im Querschnitt gebildet wird, die durch die abgerundeten Ecken (12, 13) getrennt sind.

3. Schraube nach Anspruch 1 oder 2, dadurch gekennzeichnet, daß der polygonartige Querschnitt vier abgerundete Ecken (12, 13) aufweist und zwei der abgerundeten Ecken (12) sich im wesentlichen über die gesamte Länge des Fließformabschnittes (2) erstrecken und den wirksamen Durchmesser des Fließformabschnittes (2) definieren.

4. Schraube nach einem der Ansprüche 1 bis 3, dadurch gekennzeichnet, daß die Spannuten (7) der Schraube so gestaltet sind, daß ihre Flutkanten (10), ausgehend von einer kleinen Mittelachse (X) des Querschnittes des Bohrabschnittes (1), einen bogenförmigen Verlauf in Richtung des Gewindeschaftes (3) und in Drehrichtung rückwärts beschreiben und sich unter einem Winkel zur Rotationsachse (16) dem Außendurchmesser des polygonartigen Querschnittes des Fließformabschnittes (2) nähern und dann tangential in die abgerundeten Ecken (13) im Fließformabschnitt (2) auslaufen.

5. Schraube nach Anspruch 4, dadurch gekennzeichnet, daß der Winkel kleiner als 30° ist.

6. Schraube nach einem der Ansprüche 1 bis 5, dadurch gekennzeichnet, daß im Fließformabschnitt (2) die Spannuten (7) im Auslaufbereich jeweils eine nahezu ebene Fläche (11) bilden, die sich in einem Winkel der Außenkontur des Fließformabschnittes (2) nähert und dabei der kontinuierlichen Kontur der jeweiligen Flutkante (10) folgt.

7. Schraube nach Anspruch 6, dadurch gekennzeichnet, daß der Winkel kleiner als 30° ist.

8. Schraube nach Anspruch 2, dadurch gekennzeichnet, daß sich die Schneidkanten (8) mit der jeweiligen Flutkante (10) an den für den Fließformvorgang wirksamen abgerundeten Ecken (13) im wesentlichen tangential treffen.

9. Schraube nach einem der Ansprüche 1 bis 8, dadurch gekennzeichnet, daß sich der Radius der abgerundeten Ecken (12, 13) vom Gewindeschaft (3) in Richtung auf den Bohrabschnitt (1) vergrößert.

10. Schraube nach einem der Ansprüche 1 bis 9, dadurch gekennzeichnet, daß der von den Schneidkanten (8) gebildete Durchmesser des Bohrabschnittes 50% bis 75% des Außendurchmessers des Gewindeschaftes (3) beträgt.

## Claims

1. Self-drilling, thread-forming screw comprising a threaded shank (3), a drilling section (1) with a substantially constant diameter arranged in front of it and a substantially flared unthreaded flow-forming section (2) between the drilling section (1) and the threaded shank (3), the drilling section (1) having two diametrically opposing flutes (7) extending in the longitudinal direction, each delimited by flow edges (10) and cutting edges (8) and ending in a drilling tip with the two cutting edges (8) converging at the tip, and the diameter formed by the cutting edges (8) being substantially smaller than the core diameter of the threaded shank (3), the flow-forming section (2), the largest diameter of which corresponds approximately to the core diameter of the threaded shank (3), being provided in a region adjoining the threaded shank (3) with a substantially symmetrical polygonal cross section with rounded corners (12, 13), and in which the drilling section (1), the flow-forming section (2) and the threaded shank (3) are situated on a common axis of rotation (16), characterised in that
a) the flutes (7) extend from the cutting edges (8) at least over a substantial part of the flow-forming section (2) and their flow edges (10) run in the direction of the threaded shank (3) tangentially into the rounded corners (13) of the polygonal cross section;
b) a transition region (15) is provided between the drilling section (1) and the flow-forming section (2);
c) toric projections (21) are formed on the side of the drilling section (1) remote from the flutes (7) and form a cross section increasing in the direction of the transition region (15) in such a manner that this cross section is substantially equal to the diameter formed by the cutting edges (8) in the transition region (15), and
d) the toric projections (21) merge continuously in the transition region (15) into diametrically opposing rounded corners (12), the cross section of which in the flow-forming section (2) is larger than the diameter formed by the extensions (9) of the cutting edges (8).

2. Screw according to claim 1, characterised in that the flutes (7) extend approximately over half the axial length of the flow-forming section (2) and, in the region without flutes (7), the polygonal cross section of the flow-forming section (2) adjoining the threaded shank (3) is formed by flattened portions (22) in the cross section separated by the rounded corners (12, 13).

3. Screw according to claim 1 or claim 2, characterised in that the polygonal cross section has four rounded corners (12, 13) and two of the rounded corners (12) extend substantially over the entire length of the flow-forming section (2) and define the effective diameter of the flow-forming section (2).

4. Screw according to one of claims 1 to 3, characterised in that the flutes (7) of the screw are designed in such a manner that their flow edges (10), departing from a small centre axis (X) of the cross section of the drilling section (1), describe an arcuate course rearwards in the direction of the threaded shank (3) and in the direction of rotation and approach the external diameter of the polygonal cross section of the flow-forming section (2) at an angle to the axis of rotation (16) and then run out tangentially into the rounded corners (13) in the flow-forming section (2).

5. Screw according to claim 4, characterised in that the angle is less than 30°.

6. Screw according to one of claims 1 to 5, characterised in that, in the flow-forming section (2), the flutes (7) in the run-out region each form an almost flat surface (11) which approaches the outer contour of the flow-forming section (2) at an angle and thus follows the continuous contour of the respective flow edge (10).

7. Screw according to claim 6, characterised in that the angle is less than 30°.

8. Screw according to claim 2, characterised in that the cutting edges (8) with the respective flow edges (10) meet substantially tangentially at the rounded corners (13) effective for the flow-forming operation.

9. Screw according to one of claims I to 8, characterised in that the radius of the rounded corners (12, 13) increases from the threaded shank (3) in the direction of the drilling section (1).

10. Screw according to one of claims 1 to 9, characterised in that the diameter of the drilling section formed by the cutting edges (8) is 50 % to 75 % of the external diameter of the threaded shank (3).

## Revendications

1. Vis autoforeuse et taraudeuse comprenant un fût fileté (3), une portion foreuse (1) de diamètre sensiblement constant disposée devant lui et, entre la portion foreuse (1) et le fût fileté (2), une portion de fluotournage à évasement sensiblement conique (2) dépourvue de filetage, la portion foreuse (1) comportant deux goujures (7), qui s'étendent dans la direction longitudinale et sont diamétralement opposées et qui sont délimitées respectivement par des arêtes d'écoulement (10) et des arêtes de coupe (8), et se terminant par une pointe de forage garnie des deux arêtes de coupe (8) se rejoignant à la pointe, et le diamètre formé par les arêtes de coupe (8) étant nettement inférieur au diamètre intérieur du fût fileté (3), la portion de fluotournage (2), dont le diamètre maximal correspond sensiblement au diamètre intérieur du fût fileté (3), présentant, dans une zone adjacente au fût fileté (3), une section polygonale sensiblement symétrique à coins arrondis (12, 13), et dans laquelle la portion foreuse (1), la portion de fluotournage (2) et le fût fileté (3) se trouvent sur un axe de rotation commun (16), caractérisée en ce que a) les goujures (7) s'étendent à partir des arêtes de coupe (8) au moins sur une partie importante de la portion de fluotournage (2) et leurs arêtes d'écoulement (10) pénètrent tangentiellement dans les coins arrondis (13) de la section polygonale en direction du fût fileté (3) ; b) entre la portion foreuse (1) et la portion de fluotournage (2) est prévue une zone de transition (15) ; c) des reliefs en forme de bourrelets (21) sont prévus sur le côté de la portion foreuse (1) situé à l'opposé des goujures (7) et présentent une dimension en coupe qui augmente en direction de la zone de transition (15), de sorte que, dans la zone de transition (15), ladite dimension en coupe est sensiblement égale au diamètre formé par les arêtes de coupe (8) ; et d) dans la zone de transition (15), les reliefs en forme de bourrelets (21) se prolongent chacun de manière continue par des coins arrondis (12) diamétralement opposés dont la dimension en coupe dans la portion de fluotournage (2) est supérieure au diamètre formé par les prolongements (9) des arêtes de coupe (8).

2. Vis selon la revendication 1, caractérisée en ce que les goujures (7) s'étendent sensiblement sur la moitié de la longueur axiale de la portion de fluotournage (2) et, dans la zone dépourvue de goujures (7), la section polygonale de la portion de fluotournage (2) adjacente au fût fileté (3) est formées par des parties à section aplatie (22) qui sont séparées par les coins arrondis (12, 13).

3. Vis selon la revendication 1 ou 2, caractérisée en ce que la section polygonale comporte quatre coins arrondis (12, 13), et deux des coins arrondis (12) s'étendent sensiblement sur toute la longueur de la portion de fluotournage (2) et définissent le diamètre de travail de la portion de fluotournage (2).

4. Vis selon l'une des revendications 1 à 3, caractérisée en ce que les goujures (7) de la vis sont conçues de façon que leurs arêtes d'écoulement (10), à partir d'un petit axe médian (X) de la section de la portion foreuse (1), décrivent une trajectoire arquée en direction du fût fileté (3) vers l'arrière dans le sens de rotation, se rapprochent du diamètre extérieur de la section polygonale de la portion de fluotournage (2) en formant un angle par rapport à l'axe de rotation (16), puis aboutissent tangentiellement dans les coins arrondis (13) de la portion de fluotournage (2).

5. Vis selon la revendication 4, caractérisée en ce que l'angle est inférieur à 30°.

6. Vis selon l'une des revendications 1 à 5, caractérisée en ce que, dans la portion de fluotournage (2), les goujures (7) forment chacune, dans la zone terminale, une surface pratiquement plane (11) qui se rapproche du contour extérieur de la portion de fluotournage (2) en formant un angle et qui suit ainsi le contour continu de l'arête d'écoulement (10).

7. Vis selon la revendication 6, caractérisée en ce que l'angle est inférieur à 30°.

8. Vis selon la revendication 2, caractérisée en ce que les arêtes de coupe (8) rencontrent les arêtes d'écoulement (10) correspondantes de manière sensiblement tangentielle au niveau des coins arrondis (13) actifs lors du fluotournage.

9. Vis selon l'une des revendications 1 à 8, caractérisée en ce que le rayon des coins arrondis (12, 13) s'accroît du fût fileté (3) en direction de la portion foreuse (1).

10. Vis selon l'une des revendications 1 à 9, caractérisée en ce que le diamètre de la portion foreuse formé par les arêtes de coupe correspond à 50 % à 75 % du diamètre extérieur du fût fileté (3).
